# EUROPÄISCHE PATENTSCHRIFT

(11) **EP 3 834 058 B1**
(45) Veröffentlichungstag und Bekanntmachung des Hinweises auf die Patenterteilung: **29.10.2025**
(21) Anmeldenummer: 19725971.6
(22) Anmeldetag: 21.05.2019
(51) Int. Cl.: G06F 3/01, B60K 35/10, B60K 35/20, B60K 35/65

(54) **VERFAHREN UND SYSTEM ZUM BETREIBEN VON ZUMINDEST ZWEI VON JEWEILIGEN FAHRZEUGINSASSEN AM KOPF GETRAGENEN ANZEIGEEINRICHTUNGEN**
METHOD AND SYSTEM FOR OPERATING AT LEAST TWO DISPLAY DEVICES CARRIED BY RESPECTIVE VEHICLE OCCUPANTS ON THE HEAD
PROCÉDÉ ET SYSTÈME POUR FAIRE FONCTIONNER AU MOINS DEUX DISPOSITIFS D'AFFICHAGE PORTÉS SUR LA TÊTE PAR DES OCCUPANTS DE VÉHICULE RESPECTIFS

(30) Priorität: 10.08.2018 DE 102018213556
(43) Veröffentlichungstag der Anmeldung: 16.06.2021
(73) Patentinhaber: Audi AG, 85045 Ingolstadt (DE)
(72) Erfinder: KÜHNE, Marcus, 92339 Beilngries (DE); WOLLNY, Nils, 80538 München (DE)
(74) Vertreter: Hofstetter, Schurack & Partner
(86) Internationale Anmeldenummer: PCT/EP2019/063014
(87) Internationale Veröffentlichungsnummer: WO 2020/030312

(56) Entgegenhaltungen:
- WO-A1-2017/157589
- DE-A1- 102016 224 122
- US-A1- 2018 005 429

## Beschreibung

Die Erfindung betrifft ein Verfahren und ein System zum Betreiben von zumindest zwei von jeweiligen Fahrzeuginsassen am Kopf getragenen Anzeigeeinrichtungen.

Zukünftig werden sich in Fahrzeugen spätestens ab dem vermehrten Einsatz von autonom fahrenden Fahrzeugen mit hoher Wahrscheinlichkeit streckenabhängige Virtual-Reality-Erfahrungen etablieren, mit denen Fahrzeuginsassen während der Fahrt eine Augmented-Reality-Brille oder auch eine Virtual-Reality-Brille tragend verschiedene virtuelle Erlebnisse durchleben können.

Der Einsatz von Augmented-Reality-Brillen und auch von Virtual-Reality-Brillen an sich ist bereits aus dem Stand der Technik bekannt. So zeigt beispielsweise die DE 10 2015 014 450 A1 eine Virtual-Reality-Brille und ein Verfahren zum Betreiben einer Virtual-Reality-Brille. Die Virtual-Reality-Brille umfasst eine erste Anzeigevorrichtung zur Darstellung einer virtuellen Umgebung für einen Träger der Virtual-Reality-Brille, wobei eine zweite Anzeigevorrichtung an einer Außenseite der Virtual-Reality-Brille angebracht ist, um für eine außenstehende Person die gleiche virtuelle Umgebung darzustellen, wie sie der Träger der Virtual-Reality-Brille angezeigt bekommt.

Die DE 10 2014 015 871 A1 zeigt ein Anzeigesystem für einen Kraftwagen und ein Verfahren zum Betreiben eines solchen Anzeigesystems. Das Anzeigesystem umfasst eine Augmented-Reality-Brille, die von einem Fahrer des Kraftwagens getragen wird, und eine Virtual-Reality-Brille, die von einem Beifahrer des Kraftwagens getragen wird.

Die DE 10 2012 017 700 A1 zeigt ein System und ein Verfahren zur Simulation einer Bedienung eines nicht medizinischen Werkzeugs. Eine Datenbrille dient dabei zur Darstellung einer virtuellen Umgebung für einen Träger der Datenbrille, wobei eine Anzeigeeinrichtung dazu dient, ein Abbild des Trägers innerhalb der virtuellen Umgebung darzustellen.

Die US 2015/0269780 A1 zeigt ein Virtual-Reality-Fahrsystem mit einer Plattform mit mindestens einem Sitz, einem ersten Headset, einem zweiten Headset und einem oder mehreren Wiedergabeprozessoren. Das erste und das zweite Headset haben jeweils eine Bewegungserfassungseinheit und eine Anzeigeeinheit, die konfiguriert ist, ein animiertes Video anzuzeigen.

Es ist die Aufgabe der vorliegenden Erfindung, eine Lösung bereitzustellen, mittels welcher zumindest zwei von jeweiligen Fahrzeuginsassen am Kopf getragene Anzeigeeinrichtungen besonders gut aufeinander abgestimmt betrieben werden können, wobei sich die Fahrzeuginsassen in unterschiedlichen Fahrzeugen befinden.

Diese Aufgabe wird durch ein Verfahren sowie durch ein System zum Betreiben von zumindest zwei von jeweiligen Fahrzeuginsassen am Kopf getragenen Anzeigeeinrichtungen mit den Merkmalen der unabhängigen Patentansprüche gelöst. Vorteilhafte Ausgestaltungen mit zweckmäßigen und nichttrivialen Weiterbildungen der Erfindung sind in den abhängigen Ansprüchen angegeben.

Bei dem Verfahren zum Betreiben von zumindest zwei von jeweiligen Fahrzeuginsassen am Kopf getragenen Anzeigeeinrichtungen werden jeweilige virtuelle Umgebungen mittels der Anzeigeeinrichtungen wiedergegeben. Währenddessen werden fortlaufend eine relative Anordnung der Fahrzeuginsassen zueinander charakterisierende Daten an die Anzeigeeinrichtungen übertragen und die virtuellen Umgebungen in Abhängigkeit von diesen Daten wiedergegeben.

Bei den am Kopf getragenen Anzeigeeinrichtungen kann es sich beispielsweise um Augmented-Reality-Brillen, Augmented-Reality-Kontaktlinsen oder auch um Virtual-Reality-Brillen handeln. Das erfindungsgemäße Verfahren ermöglicht eine inhaltliche Synchronisierung von In-Car-Virtual-Reality-Experiences. Da auch in Zukunft, insbesondere bei autonom fahrenden Fahrzeugen, viele Fahrten mit Kraftfahrzeugen sehr wahrscheinlich in Gemeinschaft stattfinden werden, ist ein Angebot von Mechanismen zur Schaffung gemeinsamer Erlebnisse sehr sinnvoll. Vor diesem Hintergrund ermöglicht das erfindungsgemäße Verfahren eine gemeinsame synchrone Erfahrung von virtuellen Umgebungen im Kraftfahrzeug.

So ist es beispielsweise möglich, dass die zumindest zwei Fahrzeuginsassen, die die besagte Anzeigeeinrichtung am Kopf tragen, gemeinsam etwas Kooperatives oder auch Kompetitives in Form der jeweils angezeigten virtuellen Umgebung erleben. Hierzu erfolgt erfindungsgemäß ein permanenter Informationsaustausch zwischen den zum Einsatz kommenden am Kopf getragenen Anzeigeeinrichtungen, indem fortlaufend eine relative Anordnung der Fahrzeuginsassen zueinander charakterisierende Daten an die jeweiligen Anzeigeeinrichtungen übertragen und die virtuelle Umgebung in Abhängigkeit von diesen Daten wiedergegeben werden.

Die Anzeigeeinrichtungen selbst können beispielsweise Sensoren oder anderweitige Erfassungseinrichtungen aufweisen, mittels welchen eine Ausrichtung und Positionierung der jeweiligen Anzeigeeinrichtungen ermittelt werden kann. Diese Daten können an die jeweils andere Anzeigeeinrichtung übertragen werden, um fortlaufend die jeweilige relative Anordnung der Fahrzeuginsassen zu einander zu ermitteln und die virtuelle Umgebung in Abhängigkeit davon wiederzugeben. Auch ist es beispielsweise möglich, dass in den jeweiligen Fahrzeugen verbaute Sensoren dafür verwendet werden, eine Relativpositionierung der Fahrzeuginsassen zueinander zu ermitteln, sodass diesbezügliche Daten fortlaufend an die betreffenden Anzeigeeinrichtungen übertragen werden können. Mittels des erfindungsgemäßen Verfahrens ist es so möglich, dass zumindest zwei Fahrzeuginsassen am Kopf eine der besagten Anzeigeeinrichtungen tragen, mittels welchen jeweilige virtuelle Umgebungen angezeigt werden, wobei die angezeigten virtuellen Umgebungen inhaltlich aufeinander synchronisiert werden, vor allem im Hinblick auf die relative Anordnung der Fahrzeuginsassen zueinander. Dabei ist es grundsätzlich unerheblich, ob die Fahrzeuginsassen im selben Fahrzeug oder in unterschiedlichen Fahrzeugen sitzen.

Die Erfindung sieht vor, dass sich die Fahrzeuginsassen mit am Kopf getragenen Anzeigeeinrichtungen in unterschiedlichen Fahrzeugen befinden, wobei eine Relativbewegung der Fahrzeuge zueinander erfasst und als Teil der Daten an die Anzeigeeinrichtungen übertragen werden, wobei die erfasste Relativbewegung eine jeweilige virtuelle Perspektive der Fahrzeuginsassen auf die jeweiligen virtuellen Umgebungen bestimmt. So können die in unterschiedlichen Fahrzeugen sitzenden beziehungsweise angeordneten Fahrzeuginsassen zum Beispiel gemeinsam als virtuelles Erlebnis ein virtuelles Autorennspiel oder eine virtuelle Raumschlacht oder dergleichen erleben. Je nachdem wie sich die unterschiedlichen Fahrzeuge zueinander bewegen, ändert sich die jeweilige virtuelle Perspektive der Fahrzeuginsassen auf die jeweiligen virtuellen Umgebungen. Die in den unterschiedlichen Fahrzeugen sitzenden Fahrzeuginsassen können so beispielsweise ein besonders realistisch anmutendes Autorennspiel spielen, sich - sofern dies in der Realität ebenfalls mit den Fahrzeugen stattfindet - auch gegenseitig beispielsweise mit ihren virtuellen Fahrzeugen oder virtuellen Raumgleitern oder dergleichen gegenseitig überholen und sich dabei innerhalb der virtuellen Umgebung vorzugsweise auch sehen. Alternativ ist es auch möglich, dass sich die Fahrzeuginsassen in ein und demselben Fahrzeug befinden, wobei in dem Fall nur die relativen Bewegungen der Fahrzeuginsassen zueinander innerhalb desselben Fahrzeugs erfasst und bei der Wiedergabe der jeweiligen virtuellen Umgebung berücksichtigt wird.

Die in den unterschiedlichen Kraftfahrzeugen sitzenden Fahrzeuginsassen können gemeinsam ein virtuelles Autorennen oder dergleichen erleben.

Eine nicht beanspruchte Ausführungsform sieht vor, dass falls sich die Fahrzeuginsassen in unterschiedlichen Fahrzeugen befinden, jeweilige Relativbewegungen der Fahrzeuginsassen zu jeweiligen Fahrzeuginnenräumen erfasst und als Teil der Daten an die Anzeigeeinrichtungen übertragen werden, wobei die erfassten Relativbewegungen eine jeweilige virtuelle Perspektive der Fahrzeuginsassen auf die jeweiligen virtuellen Umgebungen bestimmen und eine Relativbewegung der Fahrzeuge zueinander unberücksichtigt bleibt. So könnte es beispielsweise sein, dass die beiden Fahrzeuginsassen, die in unterschiedlichen Fahrzeugen sitzen, eine virtuelle Erfahrung miteinander teilen, bei welcher die Relativbewegung der unterschiedlichen Fahrzeuge zueinander gar nicht relevant und deren Umsetzung sogar störend wäre. In dem Fall ist es besonders vorteilhaft, wenn einfach nur jeweilige Relativbewegungen der Fahrzeuginsassen zu jeweiligen Fahrzeuginnenräumen der unterschiedlichen Fahrzeuge erfasst werden, in denen die jeweiligen Fahrzeuginsassen gerade sitzen, sodass diese erfassten Relativbewegungen ausschließlich jeweilige virtuelle Perspektiven der Fahrzeuginsassen auf die jeweiligen virtuellen Umgebungen bestimmen. Lehnt sich beispielsweise einer der Fahrzeuginsassen im betreffenden Fahrzeug nach rechts, so lehnt er sich innerhalb der virtuellen Umgebung ebenfalls nach rechts. Dabei ist es unerheblich, wie sich das Fahrzeug, in dem dieser Fahrzeuginsasse sitzt, gerade relativ zum anderen Fahrzeug bewegt, in welchem der andere Fahrzeuginsasse sitzt.

In einem Beispiel ist es vorgesehen, dass als Bestandteil der virtuellen Umgebungen mittels der Anzeigeeinrichtungen jeweilige Avatare der jeweils anderen Fahrzeuginsassen entsprechend der relativen Anordnung der Fahrzeuginsassen zueinander innerhalb der virtuellen Umgebungen angezeigt werden. So können die Fahrzeuginsassen also jeweilige virtuelle Repräsentationen des jeweils anderen Fahrzeuginsassen in Form der besagten Avatare innerhalb der jeweiligen virtuellen Umgebung sehen. Sitzen beide Fahrzeuginsassen beispielsweise im selben Fahrzeug nebeneinander, so befindet sich ein jeweiliger Avatar des betreffenden Fahrzeuginsassen in der jeweils angezeigten virtuellen Umgebung links beziehungsweise rechts von einer virtuellen Position des jeweils anderen Fahrzeuginsassen innerhalb der jeweils angezeigten virtuellen Umgebung. So können die Fahrzeuginsassen innerhalb der virtuellen Umgebung beispielsweise ganz einfach miteinander etwas Kooperatives oder Kompetitives erleben.

Eine vorteilhafte Ausführungsform der Erfindung sieht vor, dass jeweilige Kopfbewegungen der Fahrzeuginsassen fortlaufend mittels jeweiliger Erfassungseinrichtungen erfasst und als Teil der Daten an die Anzeigeeinrichtungen übertragen werden, wobei die erfassten Kopfbewegungen eine jeweilige virtuelle Perspektive der Fahrzeuginsassen auf die jeweiligen virtuellen Umgebungen bestimmen. Drehen die Fahrzeuginsassen also jeweils ihre Köpfe, so verändert sich die jeweilige virtuelle Perspektive der betreffenden Fahrzeuginsassen auf die jeweils angezeigten virtuellen Umgebungen. So können die Fahrzeuginsassen auf einfache Weise beeinflussen, aus welcher Perspektive sie auf die jeweiligen virtuellen Umgebungen blicken möchten.

Eine weitere vorteilhafte Ausführungsform der Erfindung sieht vor, dass jeweilige Kopfbewegungen der Fahrzeuginsassen erfasst und in entsprechende Kopfbewegungen der Avatare umgesetzt werden. So können die Fahrzeuginsassen durch entsprechende Kopfbewegungen bewirken, dass die jeweiligen Avatare in den virtuellen Umgebungen ihren Kopf beispielsweise genauso wie die Fahrzeuginsassen in der Realität nach links und rechts schwenken. So ist es beispielsweise möglich, dass die Fahrzeuginsassen sich innerhalb der virtuellen Umgebung durch ihre jeweiligen Avatare gegenseitig anschauen und auch voneinander abwenden können.

In weiterer vorteilhafter Ausgestaltung der Erfindung ist es vorgesehen, dass Eingaben von einer weiteren Person an einer Benutzerschnittstelle erfasst und die virtuellen Umgebungen entsprechend der erfassten Eingaben angepasst werden. So ist es beispielsweise für außenstehende Personen ohne Virtual-Reality-Brille oder auch Augmented-Reality-Brille möglich, die virtuelle Erfahrung für die anderen Fahrzeuginsassen zu beeinflussen. So kann der Außenstehende zum Beispiel die virtuelle Erfahrung für die Fahrzeuginsassen verändern und zum Beispiel einen für ihn erkennbaren vorausliegenden Streckenverlauf anpassen, infolgedessen ein virtueller Streckenverlauf entsprechend ebenfalls angepasst wird. Ganz allgemein kann ein Außenstehender also jeweilige virtuelle Erlebnisse der Fahrzeuginsassen, die die Anzeigeeinrichtung am Kopf tragen, von außen beeinflussen. Dadurch wird der Außenstehende ebenfalls in gewisser Form in die virtuelle Erfahrung mit eingebunden und es entsteht eine Art sozial geteiltes Erlebnis. Dabei wird als die Benutzerschnittstelle beispielsweise eine fahrzeugseitige Benutzerschnittstelle, insbesondere ein Touchscreen oder dergleichen, verwendet. Alternativ ist es auch möglich, dass als die Benutzerschnittstelle ein mobiles Endgerät, insbesondere ein Smartphone, ein Tabletcomputer oder eine Smartwatch, verwendet wird. So können beispielsweise Smartdevices von Fahrzeuginsassen genutzt werden oder aber auch ein Interaktionselement in einem der Fahrzeuge, zum Beispiel ein Infotainment-Touchscreen.

Das erfindungsgemäße System zum Betreiben von zumindest zwei von jeweiligen Fahrzeuginsassen am Kopf getragenen Anzeigeeinrichtungen ist dazu eingerichtet, das erfindungsgemäße Verfahren oder eine vorteilhafte Ausführungsform des erfindungsgemäßen Verfahrens durchzuführen.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftfahrzeugs, in dem zwei Fahrzeuginsassen mit jeweils aufgesetzten Virtual-Reality-Brillen sitzen, wobei zudem ein System vorgesehen ist, welches eine inhaltliche Synchronisierung der mittels der Virtual-Reality-Brillen angezeigten virtuellen Umgebung ermöglicht; und
- Fig. 2: eine schematische Darstellung von zwei Kraftfahrzeugen, wobei in dem jeweiligen Kraftfahrzeug jeweils ein Fahrzeuginsas- se mit aufgesetzter Virtual-Reality-Brille sitzt und das besagte System beispielhaft in einem der Kraftfahrzeuge vorgesehen ist.

In den Figuren sind gleiche oder funktionsgleiche Elemente mit den gleichen Bezugszeichen versehen worden.

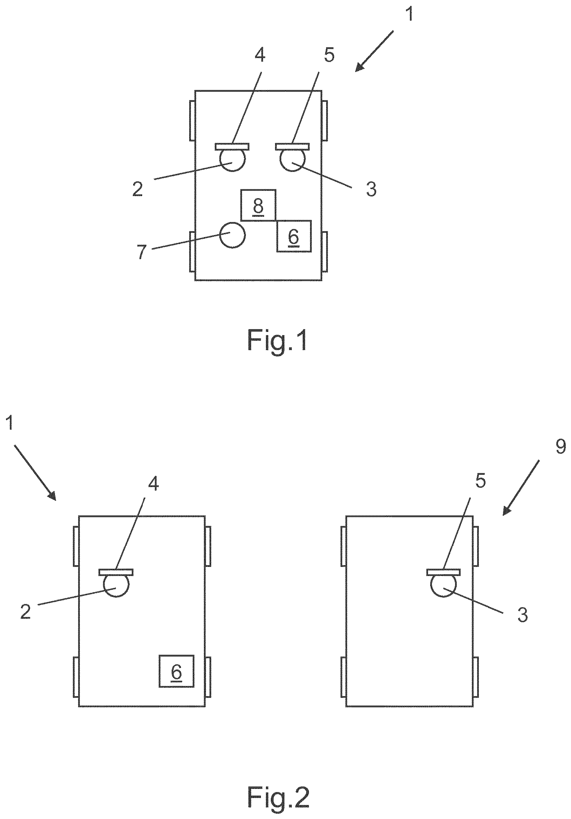

Ein Kraftfahrzeug 1 ist in einer stark schematisierten Darstellung in Fig. 1 gezeigt. In dem Kraftfahrzeug 1 sitzen zwei Fahrzeuginsassen 2, 3, welche jeweilige Virtual-Reality-Brillen 4, 5 aufgesetzt haben. Im Zusammenhang mit dieser Figur und auch der anderen Figur ist immer die Rede von Virtual-Reality-Brillen, wobei das nachfolgend erläuterte auch beispielsweise für Augmented-Reality-Brillen, Augmented-Reality-Kontaktlinsen und dergleichen gelten kann. In dem Kraftfahrzeug 1 ist zudem noch ein System 6 vorgesehen, welches zum Betreiben der beiden Virtual-Reality-Brillen 4, 5 dient. Das System 6 kann auch entgegen der vorliegenden Darstellung alleine durch die beiden Virtual-Reality-Brillen 4, 5 ausgebildet sein, welche in dem Fall vorzugsweise drahtlos miteinander kommunizieren und somit Daten untereinander austauschen können.

Mittels der Virtual-Reality-Brillen 4, 5 werden jeweilige virtuelle Umgebungen wiedergegeben. Währenddessen wird fortlaufend eine relative Anordnung der Fahrzeuginsassen 2, 3 zueinander ermittelt, wobei diesbezügliche Daten an das System 6 übertragen oder auch direkt an die jeweiligen Virtual-Reality-Brillen 4, 5 übertragen werden. Die mittels der Virtual-Reality-Brillen 4, 5 wiedergegebenen virtuellen Umgebungen werden in Abhängigkeit von der erfassten relativen Anordnung der Fahrzeuginsassen 2, 3 wiedergegeben.

So können beispielsweise jeweilige Kopfbewegungen der Fahrzeuginsassen 2, 3 fortlaufend zum Beispiel mittels der aufgesetzten Virtual-Reality-Brillen 4, 5 erfasst und an die jeweiligen Virtual-Reality-Brillen 4, 5 oder an das System 6 übertragen werden. Die jeweils erfassten Kopfbewegungen bestimmen dabei eine jeweilige virtuelle Perspektive der Fahrzeuginsassen 2, 3 auf die jeweiligen virtuellen Umgebungen, die mittels der Virtual-Reality-Brillen 4, 5 angezeigt werden.

Als Bestandteil der virtuellen Umgebung können mittels der Virtual-Reality-Brillen 4, 5 auch jeweilige Avatare der jeweils anderen Fahrzeuginsassen 2, 3 entsprechend der relativen Anordnung der Fahrzeuginsassen 2, 3 zueinander innerhalb der virtuellen Umgebung angezeigt werden. So können sich die beiden Fahrzeuginsassen 2, 3 in den jeweils angezeigten virtuellen Umgebungen in Form der Avatare gegenseitig sehen und zum Beispiel miteinander interagieren. In dem Zusammenhang kann es auch vorgesehen sein, dass jeweilige Kopfbewegungen der Fahrzeuginsassen 2, 3 erfasst und entsprechende Kopfbewegungen der Avatare umgesetzt werden. So ist es beispielsweise möglich, dass sich die beiden Fahrzeuginsassen 2, 3 in den jeweils angezeigten virtuellen Umgebungen in Form der jeweiligen Avatare anschauen oder auch voneinander abwenden können.

Zudem ist es möglich, dass Eingaben von einem weiteren Fahrzeuginsassen 7, der keine Virtual-Reality-Brille aufgesetzt hat, erfasst werden, wobei die virtuellen Umgebungen, welche mittels der Virtual-Reality-Brille 4, 5 angezeigt werden, entsprechend den erfassten Eingaben der weiteren Person 7 angepasst werden. Der Fahrzeuginsasse 7 kann seine Eingaben betreffend die virtuellen Umgebungen an einer Benutzerschnittstelle 8 eingeben. Bei der Benutzerschnittstelle 8 kann es sich beispielsweise um eine Touchscreen im Kraftfahrzeug 1 handeln. Alternativ ist es auch möglich, dass es sich bei der Benutzerschnittstelle 8 um ein Smartdevice, beispielsweise in Form einer Smartwatch, einem Smartphone, einem Tabletcomputer oder dergleichen handelt. So kann der weitere Fahrzeuginsasse 7, ohne selbst eine Virtual-Reality-Brille zu tragen, sozial mit den weiteren Fahrzeuginsassen 2, 3, die die Virtual-Reality-Brillen 4, 5 aufgesetzt haben, interagieren, nämlich indem er gewisse Eingaben vornimmt, welche die jeweilige virtuelle Erfahrung der Fahrzeuginsassen 2, 3 beeinflusst. Auch kann die weitere Person 7 außerhalb vom Kraftfahrzeug 1 angeordnet sein, um diese Eingaben zu tätigen, beispielsweise über sein Smartphone.

Erfindungsgemäß sind in Fig. 2 zwei Kraftfahrzeuge 1, 9 gezeigt, wobei in den Kraftfahrzeugen 1, 9 jeweils ein Fahrzeuginsasse 2, 3 sitzt, der eine Virtual-Reality-Brille 4, 5 aufgesetzt hat. Im Gegensatz zu dem in Fig. 1 gezeigten Ausführungsbeispiel ist es vorgesehen, dass die Fahrzeuginsassen 2, 3 also in unterschiedlichen Kraftfahrzeugen 1, 9 sitzen, jedoch ebenfalls eine virtuelle Erfahrung gemeinsam teilen, indem mittels der Virtual-Reality-Brillen 4, 5 wiederum jeweilige virtuelle Umgebungen angezeigt werden, wobei währenddessen fortlaufend eine relative Anordnung der Fahrzeuginsassen 2, 3 zueinander charakterisierende Daten zwischen den Virtual-Reality-Brillen 4, 5 übertragen und die virtuellen Umgebungen in Abhängigkeit von diesen Daten wiedergegeben werden. Falls sich, wie hier dargestellt, die Fahrzeuginsassen 2, 3 in unterschiedlichen Kraftfahrzeugen 1, 9 befinden, kann eine Relativbewegung der Kraftfahrzeuge 1, 9 zueinander erfasst und als Teil der Daten an die jeweiligen Virtual-Reality-Brillen 4, 5 übertragen werden. Die erfasste Relativbewegung der Kraftfahrzeuge 1, 9 zueinander bestimmt dabei eine jeweilige virtuelle Perspektive der Fahrzeuginsassen 2, 3 auf die jeweiligen virtuellen Umgebungen.

So ist es beispielsweise möglich, dass die in den unterschiedlichen Kraftfahrzeugen 1, 9 sitzenden Fahrzeuginsassen 2, 3 gemeinsam ein virtuelles Autorennen oder dergleichen spielen. Überholen sich die Kraftfahrzeuge 1, 9 in der Realität, beispielsweise werden diese vollautonom gesteuert, so kann es vorgesehen sein, dass die Fahrzeuginsassen 2, 3 jeweilige Avatare des jeweils anderen Fahrzeuginsassen 2, 3 in der angezeigten virtuellen Umgebung sehen, die in entsprechenden virtuellen Kraftfahrzeugen angeordnet sind. Auch ist es denkbar, dass die Fahrzeuginsassen 2,3 unabhängig von der genauen Positionierung der Kraftfahrzeuge 1, 9 ausgehend von einem virtuellen Startpunkt aus gemeinsam ein Autorennen starten, wobei auch dann die Relativbewegung der Kraftfahrzeuge 1, 9 zueinander berücksichtigt wird.

Alternativ ist es in einem nicht beanspruchten Beispiel möglich, dass nur jeweilige Relativbewegungen der Fahrzeuginsassen 2, 3 zu den jeweiligen Fahrzeuginnenräumen der Kraftfahrzeuge 1, 9 erfasst und zwischen den Virtual-Reality-Brillen 4, 5 ausgetauscht werden. Die erfassten Relativbewegungen bestimmen dabei eine jeweilige Perspektive der Fahrzeuginsassen 2, 3 auf die jeweiligen virtuellen Umgebungen, die mittels der Virtual-Reality-Brillen 4, 5 angezeigt werden. Eine Relativbewegung der Kraftfahrzeuge 1, 9 zueinander bleibt dabei unberücksichtigt. So können die in den unterschiedlichen Kraftfahrzeugen 1, 9 sitzenden Fahrzeuginsassen 2, 3 auch beispielsweise eine gemeinsame virtuelle Erfahrung teilen, bei der die Relativbewegung der Kraftfahrzeuge 1, 9 zueinander unberücksichtigt bleibt. Dabei ist einzig und allein entscheidend, wie sich die Fahrzeuginsassen 2, 3 relativ zu den jeweiligen Fahrzeuginnenräumen der Kraftfahrzeuge 1, 9 bewegen. Beugt sich der Fahrzeuginsasse 2 beispielsweise nach rechts und der Fahrzeuginsasse 3 nach links, so kann dies in der virtuellen Umgebung dazu führen, dass die beiden Fahrzeuginsassen 2, 3 sich innerhalb der virtuellen Umgebung gegenseitig annähern, und zwar unabhängig von der Relativbewegung der Kraftfahrzeuge 1, 9.

Es ist vorgesehen, dass ein weiterer Fahrzeuginsasse 7 über eine Benutzerschnittstelle 8 - wie im Zusammenhang mit Fig. 1 beschrieben - Einfluss auf die jeweiligen virtuellen Umgebungen nehmen kann, die mittels der Virtual-Reality-Brillen 4, 5 wiedergegeben werden.

Anhand der erläuterten Ausführungsbeispiele wurde deutlich, wie eine inhaltliche Synchronisierung von verschiedenen In-Car-Virtual-Reality-Experiences erfolgen und zudem eine inhaltliche Beeinflussung durch Eingaben einer Person 7 erfolgen kann, die keine Virtual-Reality-Brille oder Augmented-Reality-Brille aufgesetzt hat.

## Patentansprüche

1. Verfahren zum Betreiben von zumindest zwei von jeweiligen Fahrzeuginsassen (2, 3) am Kopf getragenen Anzeigeeinrichtungen (4, 5), bei welchem jeweilige virtuelle Umgebungen mittels der Anzeigeeinrichtungen (4, 5) für eine gemeinsame synchrone Erfahrung für die Fahrzeuginsassen (2, 3) wiedergegeben werden, wobei währenddessen fortlaufend eine relative Anordnung der Fahrzeuginsassen (2, 3) zueinander charakterisierende Daten an die Anzeigeeinrichtungen (4, 5) übertragen und die virtuellen Umgebungen in Abhängigkeit von diesen Daten wiedergegeben werden, sodass die angezeigten virtuellen Umgebungen inhaltlich aufeinander synchronisiert werden, vor allem im Hinblick auf die relative Anordnung der Fahrzeuginsassen (2, 3) zueinander, wobei als Bestandteil der virtuellen Umgebungen mittels der Anzeigeeinrichtungen (4, 5) jeweilige Avatare der jeweils anderen Fahrzeuginsassen (2, 3) entsprechend der relativen Anordnung der Fahrzeuginsassen (2, 3) zueinander innerhalb der virtuellen Umgebungen angezeigt werden,
**dadurch gekennzeichnet, dass**
sich die Fahrzeuginsassen (2, 3) mit am Kopf getragenen Anzeigeeinrichtungen (4, 5) in unterschiedlichen Fahrzeugen (1, 9) befinden, wobei eine Relativbewegung der Fahrzeuge (1, 9) zueinander erfasst und als Teil der Daten an die Anzeigeeinrichtungen (4, 5) übertragen werden, wobei die erfasste Relativbewegung eine jeweilige virtuelle Perspektive der Fahrzeuginsassen (2 3) mit am Kopf getragenen Anzeigeeinrichtungen (4, 5) auf die jeweiligen virtuellen Umgebungen bestimmt; sodass die in den unterschiedlichen Kraftfahrzeugen (1, 9) sitzenden Fahrzeuginsassen (2, 3) mit am Kopf getragenen Anzeigeeinrichtungen (4, 5) gemeinsam ein virtuelles Autorennen erleben.

2. Verfahren nach Anspruch 1,
**dadurch gekennzeichnet, dass**
jeweilige Kopfbewegungen der Fahrzeuginsassen (2, 3) mit am Kopf getragenen Anzeigeeinrichtungen (4, 5) fortlaufend mittels jeweiliger Erfassungseinrichtungen erfasst und als Teil der Daten an die Anzeigeeinrichtungen (4, 5) übertragen werden, wobei die erfassten Kopfbewegungen eine jeweilige virtuelle Perspektive der Fahrzeuginsassen (2, 3) mit am Kopf getragenen Anzeigeeinrichtungen (4, 5) auf die jeweiligen virtuellen Umgebungen bestimmen.

3. Verfahren nach einem der vorhergehenden Ansprüche,
**dadurch gekennzeichnet, dass**
jeweilige Kopfbewegungen der Fahrzeuginsassen (2, 3) mit am Kopf getragenen Anzeigeeinrichtungen (4, 5) erfasst und in entsprechende Kopfbewegungen der Avatare umgesetzt werden.

4. Verfahren nach einem der vorhergehenden Ansprüche,
**dadurch gekennzeichnet, dass**
Eingaben von einer weiteren Person (7) an einer Benutzerschnittstelle (8) erfasst und die virtuellen Umgebungen entsprechend der erfassten Eingaben angepasst werden.

5. Verfahren nach einem der vorhergehenden Ansprüche,
**dadurch gekennzeichnet, dass**
als die Benutzerschnittstelle (8) eine fahrzeugseitige Benutzerschnittstelle (8), insbesondere ein Touchscreen, verwendet wird.

6. Verfahren nach Anspruch 4,
**dadurch gekennzeichnet, dass**
als die Benutzerschnittstelle (8) ein mobiles Endgerät, insbesondere ein Smartphone, ein Tabletcomputer oder eine Smartwatch, verwendet wird.

7. System (6) zum Betreiben von zumindest zwei von jeweiligen Fahrzeuginsassen (2, 3) am Kopf getragenen Anzeigeeinrichtungen (4, 5), welches dazu eingerichtet ist, ein Verfahren gemäß einem der vorhergehenden Ansprüche durchzuführen.

## Claims

1. A method for operating at least two display devices (4, 5) worn on the head by respective vehicle occupants (2, 3), in which respective virtual environments are represented by means of the display devices (4, 5) for a shared synchronous experience for the vehicle occupants (2, 3), while data that characterize a relative position of the vehicle occupants (2, 3) with respect to one another are continuously transmitted to the display devices (4, 5), and the virtual environments are represented as a function of these data, so that the contents of the displayed virtual environments are synchronized with one another, in particular with regard to the relative position of the vehicle occupants (2, 3) with respect to one another, wherein as a component of the virtual environments, within the virtual environments the display devices (4, 5) display avatars of the respective other vehicle occupants (2, 3) corresponding to the relative position of the vehicle occupants (2, 3) with respect to one another, **characterized in that**
the vehicle occupants (2, 3) with display devices (4, 5) worn on the head are situated in different vehicles (1, 9), wherein
a relative movement of the vehicles (1, 9) with respect to one another is detected, and as part of the data, is transmitted to the display devices (4, 5), wherein the detected relative movement determines a respective virtual perspective of the vehicle occupants (2, 3), with display devices (4, 5) worn on the head, on the respective virtual environments, so that the vehicle occupants (2, 3) who are sitting in the different motor vehicles (1, 9) with display devices (4, 5) worn on the head jointly experience virtual car racing.

2. The method according to claim 1,
**characterized in that**
respective head movements of the vehicle occupants (2, 3) with display devices (4, 5) worn on the head are continuously detected by means of respective detection devices, and as part of the data, are transmitted to the display devices (4, 5), wherein the detected head movements determine a respective virtual perspective of the vehicle occupants (2, 3), with display devices (4, 5) worn on the head, on the respective virtual environments.

3. The method according to one of the preceding claims,
**characterized in that**
respective head movements of the vehicle occupants (2, 3) with display devices (4, 5) worn on the head are detected and converted into corresponding head movements of the avatars.

4. The method according to one of the preceding claims,
**characterized in that**
inputs from a further person (7) at a user interface (8) are detected, and the virtual environments are adapted corresponding to the detected inputs.

5. The method according to one of the preceding claims,
**characterized in that**
a user interface (8) on the vehicle side, in particular a touchscreen, is used as the user interface (8).

6. The method according to claim 4,
**characterized in that**
a mobile device, in particular a smart phone, a tablet computer, or a smart watch, is used as the user interface (8).

7. A system (6) for operating at least two display devices (4, 5) worn on the head by respective vehicle occupants (2, 3), which is configured to carry out a method according to one of the preceding claims.

## Revendications

1. Procédé permettant de faire fonctionner deux dispositifs d'affichage (4, 5) portés sur la tête par des occupants de véhicule (2, 3) respectifs, dans lequel des environnements virtuels respectifs sont reproduits au moyen des dispositifs d'affichage (4, 5) pour une expérience synchrone commune destinée aux occupants de véhicule (2, 3), dans lequel pendant ce temps-là, des données caractérisant une disposition relative des occupants de véhicule (2, 3) les uns par rapport aux autres sont en continu transmises aux dispositifs d'affichage (4, 5) et les environnements virtuels sont reproduits en fonction de ces données de sorte que les environnements virtuels affichés sont synchronisés les uns par rapport aux autres concernant le contenu, notamment en ce qui concerne la disposition relative des occupants de véhicule (2, 3) les uns par rapport aux autres, dans lequel, en faisant partie des environnements virtuels, et au moyen des dispositifs d'affichage (4, 5), des avatars respectifs des autres occupants de véhicule (2, 3) respectivement sont affichés selon la disposition relative des occupants de véhicule (2, 3) les uns par rapport aux autres à l'intérieur des environnements virtuels,
**caractérisé en ce que** les occupants de véhicule (2, 3) munis de dispositifs d'affichage (4, 5) portés sur la tête se trouvent dans différents véhicules (1, 9), dans lequel un mouvement relatif des véhicules (1, 9) les uns par rapport aux autres est détecté et transmis aux dispositifs d'affichage (4, 5) en faisant partie des données, dans lequel le mouvement relatif détecté détermine une perspective virtuelle respective des occupants de véhicule (2, 3) munis de dispositifs d'affichage (4, 5) portés sur la tête sur les environnements virtuels respectifs ; de sorte que des occupants de véhicule (2, 3) munis de dispositifs d'affichage (4, 5) portés sur la tête, assis dans les différents véhicules automobiles (1, 9), vivent ensemble une course automobile virtuelle.

2. Procédé selon la revendication 1, **caractérisé en ce que** des mouvements de la tête respectifs des occupants de véhicule (2, 3) munis de dispositifs d'affichage (4, 5) portés sur la tête sont détectés en continu au moyen de dispositifs de détection respectifs et sont transmis aux dispositifs d'affichage (4, 5) en faisant partie des données, dans lequel les mouvements de la tête détectés déterminent une perspective virtuelle respective des occupants de véhicule (2, 3), munis de dispositifs d'affichage (4, 5) portés sur la tête, sur les environnements virtuels respectifs.

3. Procédé selon l'une quelconque des revendications précédentes, **caractérisé en ce que** des mouvements de la tête respectifs des occupants de véhicule (2, 3), munis de dispositifs d'affichage (4, 5) portés sur la tête, sont détectés et mis en œuvre par des mouvements de la tête correspondants des avatars.

4. Procédé selon l'une quelconque des revendications précédentes, **caractérisé en ce que** des entrées d'une personne supplémentaire (7) sont détectées au niveau d'une interface utilisateur (8), et les environnements virtuels sont adaptés selon les entrées détectées.

5. Procédé selon l'une quelconque des revendications précédentes, **caractérisé en ce que** comme interface utilisateur (8) une interface utilisateur (8) côté véhicule, en particulier un écran tactile, est utilisée.

6. Procédé selon la revendication 4, **caractérisé en ce que** comme interface utilisateur (8) un équipement utilisateur mobile, en particulier un smartphone, une tablette ou une montre intelligente, est utilisé.

7. Système (6) permettant de faire fonctionner deux dispositifs d'affichage (4, 5) portés sur la tête par des occupants de véhicule (2, 3) respectifs, qui est conçu pour exécuter un procédé selon l'une quelconque des revendications précédentes.
